# FASCICULE DE BREVET EUROPEEN

(11) **EP 1 629 167 B1**
(45) Date de publication et mention de la délivrance du brevet: **30.08.2006**
(21) Numéro de dépôt: 04767167.2
(22) Date de dépôt: 25.05.2004
(51) Int. Cl.: E05D 7/10, A47J 37/06

(54) **CHARNIERE POUR APPAREIL MENAGER COMPORTANT DEUX PANNEAUX ARTICULES**
HAUSGERÄTESCHARNIER MIT ZWEI ANGELENKTEN TAFELN
HOUSEHOLD APPLIANCE HINGE WITH TWO HINGED PANELS

(30) Priorité: 28.05.2003 FR 0306520
(43) Date de publication de la demande: 01.03.2006
(73) Titulaire: SEB SA, 69130 Ecully (FR)
(72) Inventeur: GRUAZ, Denis, F-74370 Villaz (FR)
(74) Mandataire: Somnier, Jean-Louis
(86) Numéro de dépôt international: PCT/FR2004/001289
(87) Numéro de publication internationale: WO 2004/109047

(56) Documents cités:
- EP-A- 0 646 344
- EP-A- 0 696 430
- CH-A- 669 243
- DE-B- 1 184 393
- FR-A- 2 687 133
- GB-A- 891 603
- GB-A- 972 813

## Description

L'invention se rapporte à une charnière utilisée pour articuler entre eux deux panneaux d'un appareil ménager, par exemple un appareil électroménager du type grille-viande ou croque-gaufre.

On connaît une charnière d'articulation de deux panneaux d'un appareil ménager, du type comportant au moins un logement qui est réalisé dans un premier panneau, et au moins un élément d'articulation qui est solidaire du deuxième panneau et qui est monté en rotation dans le logement (par exemple EP-A-0646344).

Toutefois, les charnières d'appareil ménager de l'état de la technique sont conformées de sorte que l'utilisateur ne puisse pas séparer les panneaux de l'appareil. Or cette séparation peut s'avérer avantageuse, par exemple pour faciliter et améliorer le nettoyage de ces panneaux.

Le problème posé est de réaliser une charnière simple, économique, fiable, pouvant être manipulée par l'utilisateur de l'appareil ménager afin de lui permettre de séparer et de réunir les panneaux que cette charnière articule.

La solution apportée par la présente invention est une charnière du type précité, dont l'élément d'articulation est mobile entre une position rétractée dans laquelle il ne peut pénétrer dans le logement pour permettre la séparation des deux panneaux, et une position d'articulation dans laquelle il est adapté à pénétrer dans le logement et à réaliser l'articulation quand les deux panneaux sont correctement disposés l'un par rapport à l'autre, l'appareil comprenant un élément de commande qui comporte un organe de préhension permettant de le déplacer manuellement entre une position de libération et une position de verrouillage, et qui est adapté coopérer avec l'élément d'articulation de sorte que celui-ci est dans ses positions rétractée et d'articulation quand l'élément de commande est dans ses positions de libération et de verrouillage, respectivement.

Ainsi, l'utilisateur peut facilement séparer et réunir, à volonté, les deux panneaux articulés par la charnière. Quand il entraîne l'élément de commande de sa position de verrouillage à sa position de libération, l'élément d'articulation passe de sa position d'articulation à sa position rétractée dans laquelle les deux panneaux n'ont plus de lien mécanique entre eux (l'élément d'articulation étant disposé entièrement hors du logement), et les deux panneaux peuvent être manipulés l'un indépendamment de l'autre. Quand il entraîne l'élément de commande de sa position de libération à sa position de verrouillage, l'élément d'articulation passe de sa position rétractée à sa position d'articulation dans laquelle l'élément d'articulation est adapté à être dans le logement : soit les deux panneaux sont correctement disposés l'un par rapport à l'autre, l'élément d'articulation est alors disposé dans le logement et les deux panneaux sont réunis et articulés l'un à l'autre, soit ils sont disposés de façon incorrecte, l'élément d'articulation est alors hors du logement et les deux panneaux demeurent séparés.

Selon un mode particulier, un élément de connexion monté mobile sur un panneau entre une position inactive et une position de connexion est adapté à établir une connexion avec un élément complémentaire solidaire de ce panneau uniquement quand il est dans sa position de connexion, l'élément de connexion coopérant avec l'élément d'articulation et étant conformé de manière à être mobile de sa position inactive, jusqu'à sa position de connexion, si l'élément d'articulation est disposé dans le logement, ou, jusqu'à une position d'arrêt située entre ses positions inactive et de connexion si l'élément d'articulation est hors du logement.

Ainsi, quand les deux panneaux sont articulés l'un à l'autre, l'élément d'articulation est dans le logement et l'élément de connexion est mobile de sa position inactive à sa position de connexion dans laquelle il établit une connexion avec l'élément complémentaire, et, quand les deux panneaux sont séparés l'un à l'autre, l'élément d'articulation est hors du logement (quelle que soit la position de l'élément d'articulation) et l'élément de connexion est mobile de sa position inactive à sa position d'arrêt et ne peut atteindre sa position de connexion. Un tel mode de réalisation est particulièrement avantageux pour les appareils électroménagers dont au moins l'un des deux panneaux est adapté à être alimenté en électricité : l'alimentation ne peut être réalisée par l'élément de connexion uniquement si les deux panneaux sont articulés l'un à l'autre, la charnière jouant ainsi le rôle d'un dispositif de sécurité.

D'autres particularités et avantages apparaîtront dans la description détaillée du mode de réalisation illustré par les dessins mis en annexe et donné uniquement à titre d'exemple.
La figure 1 est une vue en perspective éclatée d'un appareil ménager comportant une charnière conforme à la présente invention ;
La figure 2 est une vue en coupe simplifiée de l'appareil ménager selon l'axe de la charnière ;
La figure 3 est une vue en perspective vu de dessous, d'un élément de commande selon un mode de réalisation particulier conforme à la présente invention sans son capot de protection ;
La figure 4 est une vue en perspective simplifiée illustrant la coopération, en position de libération, entre une tige et un moyen de commande d'une charnière selon un mode de réalisation particulier ;
La figure 5 est une vue semblable à la figure 4, le moyen de commande étant en position de sélection ;
La figure 6 est une vue semblable aux figures 4 et 5, le moyen de commande étant en position d'arrêt ;
La figure 7 est une vue semblable aux figures 4 à 6, le moyen de commande étant en position de connexion ;
La figure 8 est une vue en coupe schématique illustrant la coopération entre l'élément de commande et un premier type d'organe de commande manuelle ; et
La figure 9 est une vue similaire à la figure 8, l'organe de commande manuelle étant d'un second type.

Un appareil ménager 1 (en l'occurrence un gaufrier 1) comprend deux panneaux 2,3 articulés entre eux par une charnière 4 qui s'étend selon un axe d'articulation 5.

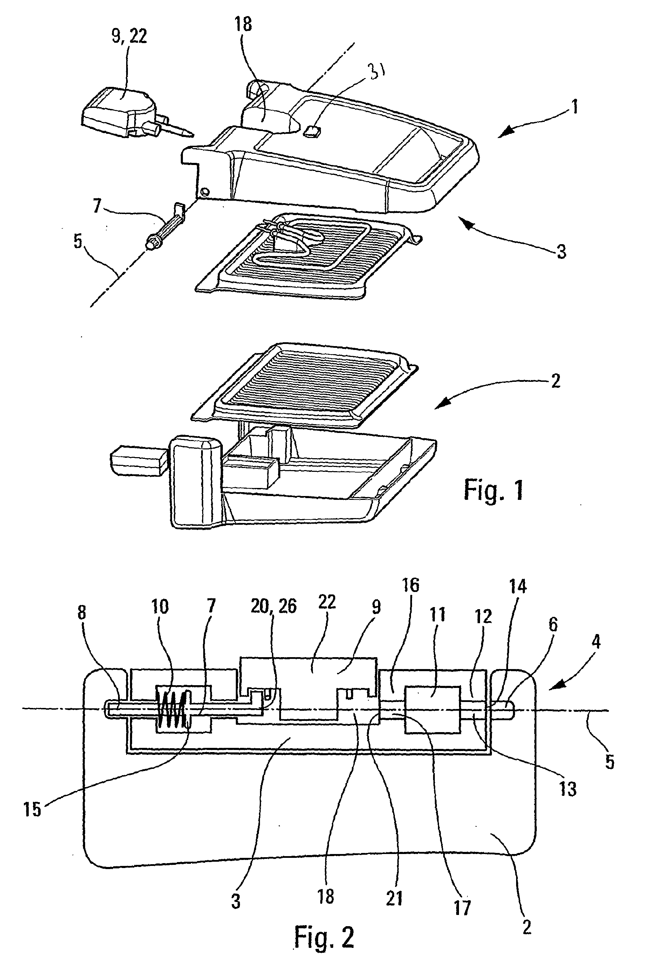

Un premier panneau 2 comporte, de chaque côté latéral, un logement 6, et le second panneau 3 comporte, réciproquement, de chaque coté latéral, un élément d'articulation 8 porté par une tige 7. Pour plus de compréhension, à la figure 2, l'illustration ne représente une tige 7 que d'un seul côté, l'autre côté étant laissé vide.

L'élément d'articulation est formée par une première extrémité de la tige et est adapté à pénétrer dans le logement 6 correspondant de façon à réaliser la charnière 4.

Chaque tige 7 est mobile entre une position rétractée et une position d'articulation.

Quand la tige 7 est en position rétractée, l'élément d'articulation 8 ne peut pénétrer dans le logement 6 correspondant, et de ce fait, les deux panneaux 2,3 peuvent être séparés.

Quand la tige 7 est en position d'articulation, l'élément d'articulation 8 est dans le logement 6 correspondant (pourvu que les deux panneaux 2,3 aient été préalablement disposés correctement l'un par rapport à l'autre), la charnière 4 étant réalisée, les deux panneaux étant réunis l'un à l'autre de façon pivotante autour de l'axe 5 (figure 2).

L'appareil ménager 1 comporte également un élément de commande 9 mobile entre une position de libération et une position de verrouillage. L'élément de commande 9 est adapté à coopérer avec les deux tiges 7 de sorte que celles-ci sont dans leurs positions rétractée et d'articulation quand il est dans ses positions de libération et de verrouillage, respectivement. L'élément de commande 9 comprend un organe de préhension 30 (en l'occurrence une poignée) permettant de le déplacer manuellement et facilement de l'une à l'autre de ses positions.

En outre, afin de fiabiliser la tenue de l'élément de commande 9 dans sa position de verrouillage et éviter ainsi tout déplacement non souhaité, il est préférable que l'utilisateur doive fournir un certain effort pour déplacer l'élément de commande 9 hors de sa position de verrouillage. Afin de faciliter un tel déplacement tout en conservant la fiabilité du positionnement, le deuxième panneau 3 comprend un organe de commande manuelle 31 qui est mobile entre une position de repos et une position d'éjection. Cet organe 31 est adapté à coopérer avec l'élément de commande 9 de façon à, quand il passe de sa position de repos à sa position d'éjection, entraîner l'élément de commande hors de sa position de verrouillage.

Comme on peut le voir à la figure 8, dans un premier mode de réalisation, l'organe de commande manuelle 31 est un bouton 31 qui est monté coulissant dans le deuxième panneau 3. Ce bouton 31 comprend une surface de commande manuelle 32 accessible à l'utilisateur et une surface inclinée 33 qui est adaptée à glisser contre une surface inclinée complémentaire 34 portée par l'élément de commande 9 de façon à déplacer ce dernier.

Comme on peut le voir à la figure 9, dans un second mode de réalisation, l'organe de commande manuelle 31 est un levier 31 qui est monté pivotant par rapport au deuxième panneau 3 autour d'un axe de pivotement 35. Ce levier 31 comprend, outre la surface de commande manuelle 32, une surface de came 36 qui est adaptée à venir en butée contre l'élément de commande 9 et à le déplacer quand le levier 31 pivote.

Dans le présent exemple, chaque tige 7 est sollicitée vers sa position rétractée par un ressort 10. Chaque tige 7 est montée coulissante par rapport au deuxième panneau 3 selon la direction de l'axe 5 de la charnière 4.

De chaque côté latéral, le deuxième panneau 3 comporte un logement 11 traversé par la tige 7 correspondante.

Chaque logement 11 est délimité d'un côté par une paroi externe 12 qui est perpendiculaire à l'axe 5, qui est adjacente au logement 6 correspondant du premier panneau 2 quand les deux panneaux 2,3 sont correctement disposés l'un par rapport à l'autre, et qui est traversée par un canal externe 13 débouchant, par un orifice 14, face au logement 6 correspondant.

Chaque élément d'articulation 8 est monté coulissant dans le canal externe 13 correspondant. Il fait saillie hors de l'orifice 14 correspondant quand la tige 7 est dans sa position d'articulation, et est logé dans le canal externe 13 quand la tige 7 est dans sa position rétractée.

Pour chaque tige 7, la position rétractée est définie par un ergot 15 solidaire de la tige 7 et venant en butée contre une paroi interne 16 qui délimite le logement 11 correspondant, qui fait face à la paroi externe 12 correspondante, et qui est traversée par un canal interne 17 dans lequel la tige 7 est adaptée à coulisser.

Dans le présent exemple, l'élément de commande 9 est séparable du gaufrier 1, la séparation de l'élément de commande 9 de l'appareil ménager correspondant à une position de libération.

Le deuxième panneau 3 comporte une cavité 18 dans laquelle l'élément de commande 9 est adapté à coulisser selon une direction de translation perpendiculaire à l'axe 5 de la charnière 4.

L'élément de commande 9 comprend, de chaque côté, une surface de commande 19 conformée de manière à entraîner, pendant le déplacement de l'élément de commande 9, un élément d'entraînement 20 qui, dans le présent exemple, est constitué par la deuxième extrémité de la tige 7 correspondante. La surface de commande 19 agit ainsi comme une surface de came.

Chaque canal interne 17 débouche, par un orifice 21, dans la cavité 18, face à l'élément de commande 9.

Chaque élément d'entraînement 20 est monté coulissant dans le canal interne 17 correspondant, et fait saillie hors de l'orifice 21 correspondant que la tige 7 soit dans sa position d'articulation ou dans sa position rétractée.

Ainsi, dans le présent exemple, quand les deux panneaux 2,3 du gaufrier 1 sont articulés, l'élément de commande 9 est dans sa position de verrouillage dans la cavité 18, les deux éléments d'entraînement 20 sont mis en butée contre les surfaces de commande 19 par l'action des ressorts 10, les deux surfaces de commande 19 étant conformées de sorte que, quand l'élément de commande 9 est en position de verrouillage, les tiges 7 sont dans leur position d'articulation.

Quand l'utilisateur veut séparer les deux panneaux 2,3, l'élément de commande 9 est entraîné vers sa position de libération (et vers sa séparation du deuxième panneau 3), comme les deux ressorts 10 sollicitent les deux éléments d'entraînement 20 en direction de la cavité 18, et du fait de la forme des deux surfaces de commande 19, la translation de l'élément de commande 9 a pour conséquence le coulissement des deux tiges 7, de leur position d'articulation à leur position rétractée.

Quand l'utilisateur veut réunir les deux panneaux 2,3, il les dispose correctement l'un à l'autre, ajuste correctement l'élément de commande 9 par rapport à la cavité 18 et l'entraîne jusqu'à sa position de verrouillage, les deux surfaces de commande 19 entraînant les deux éléments d'entraînement 20 vers l'extérieur de la cavité 18 jusqu'à ce que les tiges 7 soient en position d'articulation.

Dans le présent mode de réalisation, le gaufrier 1 comprend un élément de connexion 22 adapté à permettre l'alimentation électrique du deuxième panneau 3 du gaufrier 1.

L'élément de connexion 22 est monté mobile sur le deuxième panneau 3 entre une position inactive et une position de connexion, l'élément de connexion 22 étant adapté à établir la connexion électrique uniquement quand il est dans sa position de connexion.

L'amplitude du mouvement de l'élément de connexion 22 dépend du positionnement des deux panneaux 2,3. En effet, l'élément de connexion 22 coopère avec les deux tiges 7 et est conformé de manière à être mobile de sa position inactive, jusqu'à sa position de connexion, si les éléments d'articulation 8 sont disposés dans leur logement 6, ou, jusqu'à une position d'arrêt située entre ses positions inactive et de connexion, si les éléments d'articulation 8 sont hors de leur logement 6.

Par ailleurs, l'amplitude du mouvement de chaque tige 7 dépend aussi du positionnement des deux panneaux 2,3. En effet, chaque tige 7 est mobile de sa position rétractée, jusqu'à une position de contact dans laquelle l'élément d'articulation 8 est en butée dans le logement 6 correspondant, si les deux panneaux 2,3 sont articulés l'un à l'autre, ou, jusqu'à une position déployée dans laquelle elle est fait saillie hors de l'orifice 14, au delà de sa position de contact, si les deux panneaux 2,3 sont séparés l'un de l'autre.

Ainsi, chaque tige 7 peut prendre les quatre positions successives suivantes lors de son mouvement de translation : une position rétractée, une position d'articulation, la position de contact (qui est une des positions d'articulation), et une position déployée (uniquement si l'élément d'articulation 8 n'est pas dans le logement 6).

L'élément de connexion 22 est en outre mobile entre sa position inactive et une position de sélection située entre ses positions inactive et d'arrêt, et il est adapté à entraîner les deux tiges 7 de leur position d'articulation jusqu'à leur position de contact quand il passe de sa position inactive à sa position de sélection.

Ainsi, l'élément de connexion 22 peut prendre les quatre positions successives suivantes lors de son mouvement de translation : une position inactive, une position de sélection, une position d'arrêt, et une position de connexion (uniquement si l'élément d'articulation 8 est en butée dans le logement 6).

L'élément de connexion 22 comprend, de chaque côté, un organe de sélection 23 qui est mobile entre une position d'entraînement et une position activée.

Chaque organe de sélection 23 est adapté à coopérer avec une tige 7 correspondante de sorte que, quand l'élément d'articulation 8 est hors du logement 6, il est dans sa position d'entraînement et il entraîne la tige 7 au delà de sa position de contact quand l'élément de connexion 22 passe de sa position de sélection à sa position d'arrêt, et, quand l'élément d'articulation 8 est dans le logement 6, la tige 7 l'entraîne de sa position d'entraînement à sa position activée quand l'élément de connexion 22 passe de sa position de sélection à sa position de contact.

Un ressort 24 dont la force est supérieure à celle du ressort 10 sollicitant la tige 7 correspondante, sollicite l'organe de sélection 23 correspondant vers sa position d'entraînement.

Quand l'élément de connexion 22 est en position inactive, les tiges 7 sont en position d'articulation.

Quand l'utilisateur veut établir la connexion afin de permettre l'alimentation électrique du deuxième panneau 3, il entraîne l'élément de connexion 22 de sa position inactive jusqu'à sa position de connexion.

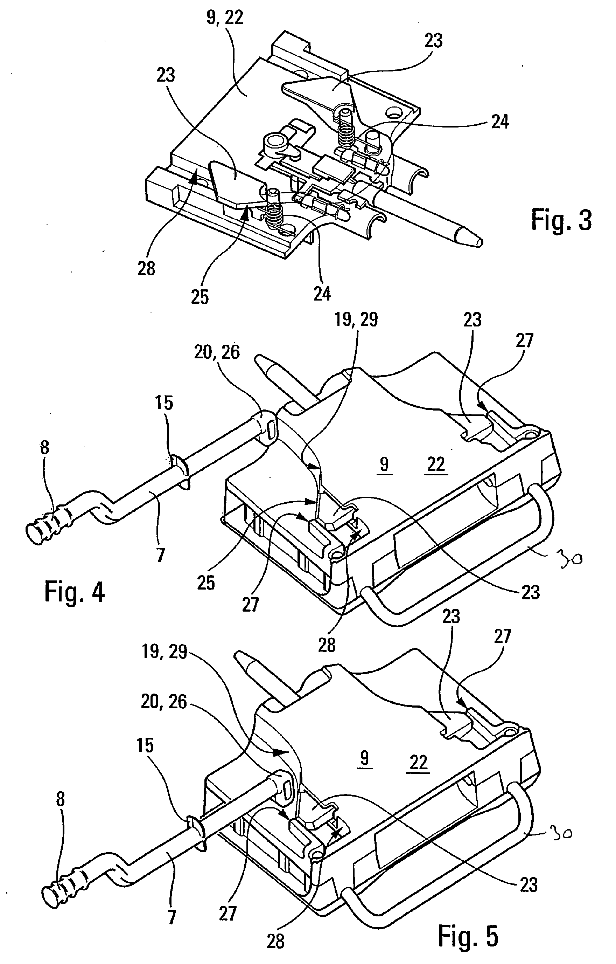

Dans un premier temps, l'élément de connexion 22 passe de sa position inactive à sa position de sélection et de ce fait, il entraîne les deux tiges 7 de leur position d'articulation jusque dans leur position de contact. A cette configuration particulière, chaque tige 7 coopère avec un organe de sélection 23 correspondant qui est en position d'entraînement du fait du ressort 24 (figure 5).

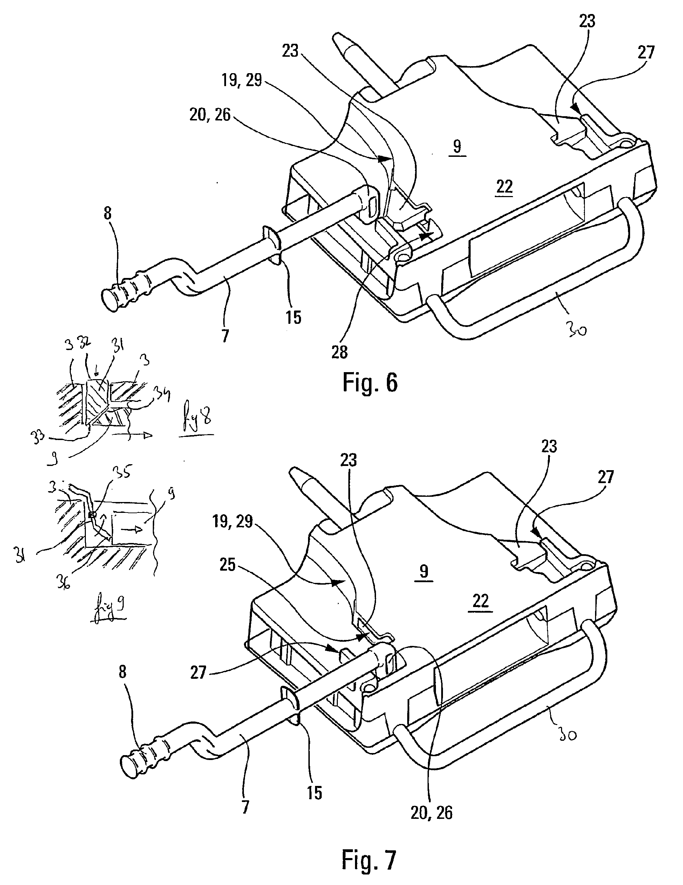

Dans un second temps, si les deux panneaux 2,3 sont correctement disposés l'un par rapport à l'autre, chaque tige 7 est en butée dans son logement 6 et, quand l'élément de connexion 22 est entraîné au delà de sa position de sélection, chaque tige 7 entraîne l'organe de sélection 23 correspondant de sa position d'entraînement à sa position activée. Du fait de la conformation de l'organe de sélection 23, l'élément de connexion 22 peut être entraîné jusque dans sa position de connexion (figure 7).

Dans un second temps, si les deux panneaux 2,3 ne sont pas correctement disposés l'un par rapport à l'autre, les tiges 7 ne sont pas en butée dans leur logement 6 et, quand l'élément de connexion 22 est entraîné au delà de sa position de sélection, les organes de sélection 23 restent en position d'entraînement et entraînent les tiges 7 dans une position déployée (du fait du rapport de force des deux ressort 10,24). Du fait de la conformation de l'organe de sélection 23, l'élément de connexion 22 est bloqué dans son mouvement avant qu'il n'atteigne sa position de connexion (figure 6).

Dans le présent exemple, chaque organe de sélection 23 comprend une surface de sélection 25 qui est conformée de manière à entraîner un élément d'appui 26 de la tige 7 quand l'organe de sélection est dans sa position d'entraînement. Par ailleurs, l'élément de connexion 22 comprend, de chaque côté, une surface d'arrêt 27 qui prolonge la surface de sélection 25 quand l'organe de sélection 23 est en position d'entraînement et qui est conformée de manière à venir en butée contre l'élément d'appui 26 quand l'élément de connexion 22 est en position d'arrêt. L'élément de connexion 22 comporte également une surface de mise en connexion 28 qui prolonge la surface de sélection 25 quand l'organe de sélection 23 est en position activée, qui s'étend au delà de la surface d'arrêt 27 et qui est conformée de manière à maintenir l'élément d'articulation 8 dans le logement 6.

L'élément d'appui 26 est conformé de manière à pouvoir contourner la surface d'arrêt 27 quand il coulisse le long de la surface de mise en connexion 28.

En outre, l'élément de connexion 22 comprend une surface d'entraînement 29 qui coopère avec l'élément d'appui 26 de manière à entraîner la tige 7 jusque dans sa position de contact quand l'élément de connexion 22 est déplacé jusqu'à sa position de sélection et qui est prolongée par la surface de sélection 25.

Ainsi, quand la tige 7 est en position d'articulation, quand l'élément de connexion 22 est entraîné en direction de sa position de sélection, l'élément d'appui 26 entre en contact avec la surface d'entraînement 29 qui agit comme une surface de came et entraîne la tige 7 jusqu'à sa position de contact.

Si la tige 7 est dans le logement 6, le mouvement de l'élément de connexion 22 et l'agencement de l'organe de sélection 23 font que l'élément d'appui 26, en appui contre la surface de sélection 25, entraîne l'organe de sélection 23 en position activée, coulisse le long de la surface de sélection 25 puis le long de la surface de mise en connexion 28.

Si la tige 7 n'est pas dans le logement 6, le mouvement de l'élément de connexion 22 et l'agencement de l'organe de sélection 23 font que l'élément d'appui 26 coulisse le long de la surface de sélection 25 de l'organe de sélection 23 en position d'entraînement qui agit comme une surface de came, et vient en butée contre la surface d'arrêt 27 qui interdit à l'élément de connexion 22 d'atteindre sa position de connexion.

Dans le présent exemple, l'élément de connexion 22 est formé par l'élément de commande 9, l'élément d'appui 27 est formé par l'élément d'entraînement 20. De plus, la surface d'entraînement 29 prolonge la surface de commande 19, et la limite entre ces deux surfaces est futile, la position de contact étant une position de verrouillage.

On comprend bien que selon ce mode de réalisation particulier, l'alimentation du deuxième panneau 3 n'est possible que lorsque les deux panneaux 2,3 sont articulés l'un à l'autre, l'élément de commande 9 de la charnière 4 étant formé par l'élément de connexion 22 qui est adapté à alimenter le deuxième panneau 3.

Bien évidemment l'invention n'est pas limitée au présent mode de réalisation et de nombreuses modifications peuvent y être apportées.

Il est ainsi possible de réaliser une telle charnière sans que le moyen de commande comporte un élément de connexion.

Il est possible que les éléments d'articulation, d'appui et d'entraînement soient portés par un organe rotatif.

## Revendications

1. Appareil ménager (1) comportant deux panneaux (2,3) articulés entre eux par une charnière (4) qui comporte au moins un logement (6) réalisé dans un premier panneau (2), et au moins un élément d'articulation (8), solidaire du deuxième panneau (3), monté en rotation dans le logement (6), **caractérisé en ce que** l'élément d'articulation (8) est mobile entre une position rétractée dans laquelle il ne peut pénétrer dans le logement (6) pour permettre la séparation des deux panneaux (2,3), et une position d'articulation dans laquelle il est adapté à pénétrer dans le logement (6) et à réaliser l'articulation quand les deux panneaux (2,3) sont correctement disposés l'un par rapport à l'autre, et **en ce qu'**un élément de commande (9), comprenant un organe de préhension (30) permettant de le déplacer manuellement entre une position de libération et une position de verrouillage, est adapté à coopérer avec l'élément d'articulation (8) de sorte que celui-ci est dans ses positions rétractée et d'articulation quand l'élément de commande (9) est dans ses positions de libération et de verrouillage, respectivement.

2. Appareil ménager (1) selon la revendication 1, **caractérisé en ce que** l'élément de commande (9) est séparable de l'appareil ménager (1), la séparation de l'élément de commande (9) de l'appareil ménager (1) correspondant à une position de libération.

3. Appareil ménager (1) selon la revendication 1 ou 2, **caractérisé en ce qu'**un ressort (10) sollicite l'élément d'articulation (8) vers sa position rétractée.

4. Appareil ménager (1) selon l'une des revendications 1 à 3, **caractérisé en ce que** l'élément de commande (9) est monté coulissant sur le deuxième panneau (3).

5. Appareil ménager (1) selon l'une des revendications 1 à 4, **caractérisé en ce que** l'élément d'articulation (8) est porté par une tige (7) monté coulissante sur le deuxième panneau (3) selon la direction de l'axe (5) de la charnière (4).

6. Appareil ménager (1) selon la revendication 5, **caractérisé en ce que** l'élément de commande (9) comprend une surface de commande (19) conformée de manière à entraîner un élément d'entraînement (20) porté par la tige (7) pendant le déplacement de l'élément de commande (9).

7. Appareil ménager (1) selon l'une des revendications 1 à 6, **caractérisé en ce qu'**un élément de connexion (22), monté mobile sur un panneau (3) entre une position inactive et une position de connexion, est adapté à coopérer avec la charnière (4) de façon à établir une connexion avec un élément complémentaire solidaire de ce panneau (3) uniquement quand il est dans sa position de connexion.

8. Appareil ménager (1) selon la revendication 7, **caractérisé en ce que** l'élément de connexion (22) coopère avec l'élément d'articulation (8) et est conformé de manière à être mobile de sa position inactive, jusqu'à sa position de connexion, si l'élément d'articulation (8) est disposé dans le logement (6), ou, jusqu'à une position d'arrêt située entre ses positions inactive et de connexion, si l'élément d'articulation (8) est hors du logement (6).

9. Appareil ménager (1) selon la revendication 8, **caractérisé en ce que** l'élément d'articulation (8) est mobile de sa position rétractée, jusqu'à une position de contact dans laquelle il est en butée dans le logement (6), si les deux panneaux (2,3) sont articulés l'un à l'autre, ou, jusqu'à une position déployée dans laquelle il fait saillie au delà de sa position de contact, si les deux panneaux (2,3) sont séparés l'un de l'autre.

10. Appareil ménager (1) selon la revendication 9, **caractérisé en ce que** l'élément de connexion (22) est mobile entre sa position inactive et une position de sélection située entre ses positions inactive et d'arrêt, et entraîne l'élément d'articulation (8) de sa position d'articulation jusqu'à sa position de contact quand il passe de sa position inactive à sa position de sélection.

11. Appareil ménager (1) selon la revendication 10, **caractérisé en ce que** l'élément de connexion (22) comprend un organe de sélection (23) qui est mobile entre une position d'entraînement et une position activée, et qui est adapté à coopérer avec l'élément d'articulation (8) de sorte que, quand l'élément d'articulation (8) est dans sa position de contact hors du logement (6), l'organe de sélection (23) est dans sa position d'entraînement et entraîne l'élément d'articulation (8) au delà de sa position de contact quand l'élément de connexion (22) passe de sa position de sélection à sa position d'arrêt, et, quand l'élément d'articulation (8) est dans sa position de contact dans le logement (6), l'élément d'articulation (8) entraîne l'organe de sélection (23) de sa position d'entraînement à sa position activée quand l'élément de connexion (22) passe de sa position de sélection à sa position de connexion.

12. Appareil ménager (1) selon les revendications 3 et 11, **caractérisé en ce qu'**un ressort (24) dont la force est supérieure à celle du ressort (10) sollicitant l'élément d'articulation (8), sollicite l'organe de sélection (23) vers sa position d'entraînement.

13. Appareil ménager (1) selon la revendication 5 et l'une ou l'autre des revendications 11 et 12, **caractérisé en ce que** l'organe de sélection (23) comprend une surface de sélection (25) qui est conformée de manière à entraîner un élément d'appui (26) porté par la tige (7), et **en ce que** l'élément de connexion (22) comprend une surface d'arrêt (27) qui prolonge la surface de sélection (25) quand l'organe de sélection (23) est en position d'entraînement et qui est conformée de manière à venir en butée contre l'élément d'appui (26) quand l'élément de connexion (22) est en position d'arrêt, et une surface de mise en connexion (28) qui prolonge la surface de sélection (25) quand l'organe de sélection (23) est en position activée, qui s'étend au delà de la surface d'arrêt (27) et qui est conformée de manière à maintenir l'élément d'articulation (8) dans le logement (6), l'élément d'appui (26) étant conformé de manière à pouvoir contourner la surface d'arrêt (27) quand il coulisse le long de la surface de mise en connexion (28).

14. Appareil ménager (1) selon la revendication 13, **caractérisé en ce que** l'élément de connexion (22) comprend une surface d'entraînement (29) qui est prolongée par la surface de sélection (25) et qui coopère avec l'élément d'appui (26) de façon à entraîner la tige (7) jusque dans sa position de contact quand l'élément de connexion (22) passe de sa position inactive à sa position de sélection.

15. Appareil ménager (1) selon l'une des revendications 7 à 14, **caractérisé en ce que** l'élément de connexion (22) est formé par l'élément de commande (9).

16. Appareil ménager (1) selon les revendications 6, 14 et 15, **caractérisé en ce que** la surface d'entraînement (29) prolonge la surface de commande (19), et **en ce que** l'élément d'appui (26) est formé par l'élément d'entraînement (20).

17. Appareil ménager (1) selon l'une des revendications 1 à 16, **caractérisé en ce que** l'un des panneaux (2,3) comprend un organe de commande manuelle (31) qui est mobile entre une position de repos et une position d'éjection et qui est adapté à coopérer avec l'élément de commande (9) de façon à entraîner ce dernier en direction de sa position de libération quand il est entraîné dans sa position d'éjection.

18. Appareil ménager (1) selon la revendication 17, **caractérisé en ce que** l'organe de commande manuelle (31) est un bouton (31) qui est monté coulissant dans le panneau et qui comprend une surface inclinée (33) adaptée à glisser contre une surface inclinée complémentaire (34) de l'élément de commande (9) de façon à déplacer ce dernier.

19. Appareil ménager (1) selon la revendication 17, **caractérisé en ce que** l'organe de commande manuelle (31) est un levier (31) qui est monté pivotant dans le panneau autour d'un axe de pivotement (35) et qui comprend une surface de came (36) qui est adaptée à venir en butée contre l'élément de commande (9) et à le déplacer quand le levier (31) pivote.

## Claims

1. Domestic appliance (1) comprising two panels (2, 3) articulated together by a hinge (4) which comprise at least one housing (6) made in a first panel (2), and at least one articulation element (8) which is integral with the second panel (3) and rotatably mounted in the housing (6), **characterised in that** the articulation element (8) is movable between a retracted position, in which it cannot penetrate into the housing (6) in order to permit the separation of the two panels (2, 3), and an articulation position, in which it is adapted to penetrate into the housing (6) and produce the articulation when the two panels (2, 3) are correctly disposed with respect to one another, and **in that** a control element (9) comprising a gripping component (30) allowing manual displacement between a release position and a locking position is adapted to co-operate with the articulation element (8) such that this latter is in its retracted and articulation position when the control element (9) is in its release and locking positions respectively,

2. Domestic appliance (1) as claimed in Claim 1, **characterised in that** the control element (9) is separable from the domestic appliance (1), the separation of the control element (9) from the domestic appliance (1) corresponding to a release position.

3. Domestic appliance (1) as claimed in Claim 1 or 2, **characterised in that** a spring (10) loads the articulation element (8) towards its retracted position.

4. Domestic appliance (1) as claimed in any one of Claims 1 to 3, **characterised in that** the control element (9) is mounted so as to slide on the second panel (3).

5. Domestic appliance (1) as claimed in any one of Claims 1 to 4, **characterised in that** the articulation element (8) is borne by a rod (7) mounted so as to slide on the second panel (3) in the direction of the axis (5) of the hinge (4).

6. Domestic appliance (1) as claimed in Claim 5, **characterised in that** the control element (9) comprises a control surface (19) shaped in such a way as to drive a driving element (20) borne by the rod (7) during the displacement of the control element (9).

7. Domestic appliance (1) as claimed in any one of Claims 1 to 6, **characterised in that** a connection element (22) movably mounted on a panel (3) between an inactive position and a connection position is adapted to co-operate with the hinge (4) in such a way as to establish a connection to a complementary element integral with this panel (3) solely when it is in its connection position.

8. Domestic appliance (1) as claimed in Claim 7, **characterised in that** the connection element (22) co-operates with the articulation element (8) and is shaped in such a way as to be movable from its inactive position to its connection position if the articulation element (8) is disposed in the housing (6) or to a stop position situated between its inactive and connection positions if the articulation element (8) is outside the housing (6).

9. Domestic appliance (1) as claimed in Claim 8, **characterised in that** the articulation element (8) is movable from its retracted position to a contact position in which it is butted in the housing (6) if the two panels (2, 3) are articulated on one another or to a deployed position in which it projects beyond its contact position if the two panels (2, 3) are separated from one another.

10. Domestic appliance (1) as claimed in Claim 9, **characterised in that** the connection element (22) is movable between its inactive position and a selection position situated between its inactive and stop positions, and drives the articulation element (8) from its articulation position to its contact position when it passes from its inactive position to its selection position.

11. Domestic appliance (1) as claimed in Claim 10, **characterised in that** the connection element (22) comprises a selection component (23) which is movable between a driving position and an activated position and which is adapted to co-operate with the articulation element (8) such that when the articulation element (8) is in its contact position outside the housing (6) the selection component (23) is in its driving position and drives the articulation element (8) beyond its contact position when the connection element (22) passes from its selection position to its stop position and when the articulation element (8) is in its contact position in the housing (6) the articulation element (8) drives the selection component (23) from its driving position to its activated position when the connection element (22) passes from its selection position to its connection position.

12. Domestic appliance (1) as claimed in Claims 3 and 11, **characterised in that** a spring (24), the force of which is greater than that of the spring (10) loading the articulation element (8), loads the selection component (23) towards its driving position.

13. Domestic appliance (1) as claimed in Claim 5 and one or the other of Claims 11 and 12, **characterised in that** the selection component (23) comprises a selection surface (25) which is shaped in such a way as to drive a support element (26) borne by the rod (7), and that the connection element (22) comprises a stop surface (27) which extends the selection surface (25) when the selection component (23) is in the driving position and which is shaped in such a way as to come into abutment against the support element (26) when the connection element (22) is in the stop position, and a connecting surface (28) which extends the selection surface (25) when the selection component (23) is in the activated position, which extends beyond the stop surface (27) and which is shaped in such a way as to retain the articulation element (8) in the housing (6), the support element (26) being shaped in such a way as to be able to circumvent the stop surface (27) when it slides along the connecting surface (28).

14. Domestic appliance (1) as claimed in Claim 13, **characterised in that** the connection element (22) comprises a driving surface (29) which is extended by the selection surface (25) and which co-operates with the support element (26) in such a way as to drive the rod (7) as far as its contact position when the connection element (22) passes from its inactive position to its selection position.

15. Domestic appliance (1) as clamed in any one of Claims 7 to 14, **characterised in that** the connection element (22) is formed by the control element (9).

16. Domestic appliance (1) as claimed in Claims 6, 14 and 15, **characterised in that** the driving surface (29) extends the control surface (19), and **in that** the support element (26) is formed by the driving element (20).

17. Domestic appliance (1) as claimed in any one of Claims 1 to 16, **characterised in that** one of the panels (2, 3) comprises a manual control component (31) which is movable between a rest position and an ejection position and which is adapted to co-operate with the control element (9) in such a way as to drive this latter in the direction of its release position when it is driven in its ejection position.

18. Domestic appliance (1) as claimed in Claim 17, **characterised in that** the manual control component (31) is a knob (31) which is mounted so as to slide in the panel and which comprises an inclined surface (33) adapted to slide against a complementary inclined surface (34) of the control element (9) in such a way as to displace the latter.

19. Domestic appliance (1) as claimed in Claim 17, **characterised in that** the manual control component (31) is a lever (31) which is mounted so as to pivot in the panel about a pivot axis (35) and which comprises a cam surface (36) which is adapted to come into abutment against the control element (9) and to displace it when the lever (31) pivots.

## Patentansprüche

1. Haushaltsgerät (1) mit zwei miteinander über ein Scharnier (4) gelenkig verbundenen Platten (2, 3), das zumindest eine in einer ersten Platte (2) ausgeführte Aufnahme (6) und zumindest ein mit der zweiten Platte (3) einstückig ausgebildetes Gelenkelement (8) aufweist, das drehbar in der Aufnahme (6) angebracht ist, **dadurch gekennzeichnet, dass** das Gelenkelement (8) beweglich ist zwischen einer eingezogenen Position, in welcher es nicht in die Aufnahme (6) eindringen kann, um die Trennung der beiden Platten (2, 3) zuzulassen, und einer Gelenkposition, in welcher es dafür eingerichtet ist, in die Aufnahme (6) einzudringen und die Gelenkverbindung herzustellen, wenn die beiden Platten (2, 3) korrekt zueinander angeordnet sind, und dass ein Steuerelement (9) mit einem Greiforgan (30), das die manuelle Bewegung zwischen einer Freigabeposition und einer Verriegelungsposition ermöglicht, dafür eingerichtet ist, mit dem Gelenkelement (8) derart zusammenzuwirken, dass sich dieses in seiner eingezogenen und Gelenkposition befindet, wenn das Steuerelement (9) jeweils in seiner Freigabeposition und Verriegelungsposition angeordnet ist.

2. Haushaltsgerät (1) gemäß Anspruch 1, **dadurch gekennzeichnet, dass** das Steuerelement (9) von dem Haushaltsgerät (1) abtrennbar ist, wobei die Abtrennung des Steuerelementes (9) von dem Haushaltsgerät (1) einer Freigabeposition entspricht.

3. Haushaltsgerät (1) gemäß Anspruch 1 oder 2, **dadurch gekennzeichnet, dass** eine Feder (10) das Gelenkelement (8) in seine eingezogene Position vorspannt.

4. Haushaltsgerät (1) gemäß einem der Ansprüche 1 bis 3, **dadurch gekennzeichnet, dass** das Steuerelement (9) über die zweite Platte (3) gleitend angebracht ist.

5. Haushaltsgerät (1) gemäß einem der Ansprüche 1 bis 4, **dadurch gekennzeichnet, dass** das Gelenkelement (8) von einer Stange (7) getragen ist, die entlang der Richtung der Achse (5) des Scharniers (4) über die zweite Platte (3) gleitend angebracht ist.

6. Haushaltsgerät (1) gemäß Anspruch 5, **dadurch gekennzeichnet, dass** das Steuerelement (9) eine Steuerfläche (19) aufweist, die derart ausgebildet ist, dass sie ein von der Stange (7) getragenes Mitnahmeelement (20) während der Bewegung des Steuerelementes (9) mitnimmt.

7. Haushaltsgerät (1) gemäß einem der Ansprüche 1 bis 6, **dadurch gekennzeichnet, dass** ein beweglich auf einer Platte (3) zwischen einer inaktiven Position und einer Verbindungsposition angebrachtes Verbindungselement (22) dafür eingerichtet ist mit dem Scharnier (4) derart zusammenzuwirken, dass nur dann eine Verbindung mit einem einstückig mit dieser Platte (3) ausgebildeten, komplementären Element hergestellt wird, wenn es sich in seiner Verbindungsposition befindet.

8. Haushaltsgerät (1) gemäß Anspruch 7, **dadurch gekennzeichnet, dass** das Verbindungselement (22) mit dem Gelenkelement (8) zusammenwirkt und derart ausgebildet ist, dass es aus seiner inaktiven Position bis in seine Verbindungsposition bewegbar ist, wenn das Gelenkelement (8) in der Aufnahme (6) angeordnet ist, oder bis zu einer Halteposition, die zwischen seiner inaktiven Position und seiner Verbindungsposition liegt, wenn sich das Gelenkelement (8) außerhalb der Aufnahme (6) befindet.

9. Haushaltsgerät (1) gemäß Anspruch 8, **dadurch gekennzeichnet, dass** das Gelenkelement (8) von seiner eingezogenen Position bis zu einer Kontaktposition bewegbar ist, in welcher es in der Aufnahme (6) in Anschlag ist, wenn die beiden Platten (2, 3) miteinander gelenkig verbunden sind, oder bis in eine ausgefahrene Position, in welcher es über seine Kontaktposition hinaus vorspringt, wenn die beiden Platten (2, 3) voneinander getrennt sind.

10. Haushaltsgerät (1) gemäß Anspruch 9, **dadurch gekennzeichnet, dass** das Verbindungselement (22) zwischen seiner inaktiven Position und einer zwischen seiner inaktiven Position und Halteposition angeordneten Auswahlposition bewegbar ist und es das Gelenkelement (8) aus seiner Gelenkposition bis zu seiner Kontaktposition mitnimmt, wenn es von seiner inaktiven Position in seine Auswahlposition übergeht.

11. Haushaltsgerät (1) gemäß Anspruch 10, **dadurch gekennzeichnet, dass** das Verbindungselement (22) ein Auswahlorgan (23) aufweist, das zwischen einer Mitnahmeposition und einer aktivierten Position beweglich ist, und das dafür eingerichtet ist mit dem Gelenkelement (8) derart zusammenzuwirken, dass wenn sich das Gelenkelement (8) in seiner Kontaktposition außerhalb der Aufnahme (6) befindet, sich das Auswahlorgan (23) in seiner Mitnahmeposition befindet und das Gelenkelement (8) über seine Kontaktposition hinaus mitnimmt, wenn das Verbindungselement (22) aus seiner Auswahlposition in seine Halteposition übergeht, und wenn sich das Gelenkelement (8) in seiner Kontaktposition in der Aufnahme (6) befindet, das Gelenkelement (8) das Auswahlorgan (23) aus seiner Mitnahmeposition in seine aktivierte Position mitnimmt, wenn das Verbindungselement (22) von seiner Auswahlposition in seine Verbindungsposition übergeht.

12. Haushaltsgerät (1) gemäß den Ansprüchen 3 und 11, **dadurch gekennzeichnet, dass** eine Feder (24), deren Kraft größer ist als diejenige der Feder (10), welche das Gelenkelement (8) vorspannt, das Auswahlorgan (23) zu seiner Mitnahmeposition hin vorspannt.

13. Haushaltsgerät (1) gemäß Anspruch 5 und dem einen oder anderen der Ansprüche 11 und 12, **dadurch gekennzeichnet, dass** das Auswahlorgan (23) eine Auswahlfläche (25) aufweist, die derart ausgebildet ist, dass sie ein von der Stange (7) getragenes Auflageelement (26) mitnimmt, und dass das Verbindungselement (22) eine Haltefläche (27) aufweist, welche die Auswahlfläche (25) verlängert, wenn sich das Auswahlorgan (23) in der Mitnahmeposition befindet, und welche derart ausgebildet ist, dass sie gegen das Auflageelement (26) in Anschlag kommt, wenn sich das Verbindungselement (22) in der Halteposition befindet, und eine Verbindungsherstellungsfläche (28), welche die Auswahlfläche (25) verlängert, wenn sich das Auswahlorgan (23) in der aktivierten Position befindet, welche sich über die Haltefläche (27) hinaus erstreckt, und welche derart ausgebildet ist, dass sie das Gelenkelement (8) in der Aufnahme (6) hält, wobei das Auflageelement (26) derart ausgebildet ist, dass es die Haltefläche (27) umrunden kann, wenn es entlang der Verbindungsherstellungsfläche (28) gleitet.

14. Haushaltsgerät (1) gemäß Anspruch 13, **dadurch gekennzeichnet, dass** das Verbindungselement (22) eine Mitnahmefläche (29) aufweist, welche von der Auswahlfläche (25) verlängert ist, und welche mit dem Auflageelement (26) derart zusammenwirkt, dass sie die Stange (7) bis in ihre Kontaktposition mitnimmt, wenn das Verbindungselement (22) von seiner inaktiven Position in seine Auswahlposition übergeht.

15. Haushaltsgerät (1) gemäß einem der Ansprüche 7 bis 14, **dadurch gekennzeichnet, dass** das Verbindungselement (22) von dem Steuerelement (9) gebildet ist.

16. Haushaltsgerät (1) gemäß den Ansprüchen 6, 14 und 15, **dadurch gekennzeichnet, dass** die Mitnahmefläche (29) die Steuerfläche (19) verlängert, und dass das Auflageelement (26) von dem Mitnahmeelement (20) gebildet ist.

17. Haushaltsgerät (1) gemäß einem der Ansprüche 1 bis 16, **dadurch gekennzeichnet, dass** die eine der Platten (2, 3) ein manuelles Steuerorgan (31) aufweist, das beweglich ist zwischen einer Ruheposition und einer Auswurfposition, und das dafür eingerichtet ist mit dem Steuerelement (9) derart zusammenzuwirken, dass es dieses letztere in Richtung seiner Freigabeposition mitnimmt, wenn es in seine Auswurfposition bewegt wird.

18. Haushaltsgerät (1) gemäß Anspruch 17, **dadurch gekennzeichnet, dass** das manuelle Steuerorgan (31) ein Knopf (31) ist, der gleitend in der Platte angebracht ist, und der eine geneigte Fläche (33) aufweist, die dafür eingerichtet ist, gegen eine komplementäre geneigte Fläche (34) des Steuerelementes (9) derart zu gleiten, dass diese letztere verschoben wird.

19. Haushaltsgerät (1) gemäß Anspruch 17, **dadurch gekennzeichnet, dass** das manuelle Steuerorgan (31) ein Hebel (31) ist, der in der Platte schwenkbar um eine Schwenkachse (35) angebracht ist, und der eine Nockenfläche (36) aufweist, die dafür eingerichtet ist in Anschlag gegen das Steuerelement (9) zu kommen und es zu verschieben, wenn der Hebel (31) schwenkt.
